# EUROPEAN PATENT SPECIFICATION

(11) **EP 1 116 870 B1**
(45) Date of publication and mention of the grant of the patent: **22.09.2004**
(21) Application number: 01100686.3
(22) Date of filing: 11.01.2001
(51) Int. Cl.: F02D 41/38, F02D 41/40, F02D 33/02, F02D 41/08, F02D 21/08

(54) **Control system for direct injection diesel engine**
System zur Regelung eines Dieselmotors mit Direkteinspritzung
Système de commande pour un moteur diesel à injection directe

(30) Priority: 11.01.2000 JP 2000006071
(43) Date of publication of application: 18.07.2001
(73) Proprietor: Mazda Motor Corporation, Aki-gun Hiroshima-ken (JP)
(72) Inventor: Morizane, Kenichi, Aki-gun, Hiroshima-ken (JP); Watanabe, Tomomi, Aki-gun, Hiroshima-ken (JP); Terazawa, Yasuyuki, Aki-gun, Hiroshima-ken (JP); Saito, Tomoaki, Aki-gun, Hiroshima-ken (JP)
(74) Representative: Gossel, Hans K., Dipl.-Ing.

(56) References cited:
- EP-A- 0 736 685
- EP-A- 0 825 337
- EP-A- 1 059 431
- GB-A- 2 296 786
- PATENT ABSTRACTS OF JAPAN vol. 1997, no. 02, 28 February 1997 (1997-02-28) & JP 08 284709 A (TOYOTA MOTOR CORP), 29 October 1996 (1996-10-29)

## Description

### Field of the Invention

This invention relates to a control system for a direct injection diesel engine which is installed on motor vehicle, for example.

### Background of the invention

Japanese Unexamined Patent Publication No. 8-284709 discloses an example of a conventional control system for a diesel engine having a main combustion chamber and a precombustion chamber in each cylinder and an exhaust recirculating passage for recirculating exhaust gas from an exhaust passage to an intake passage. To make it possible to reduce combustion noise and maintain a desired amount of recirculated exhaust gas without the need for a dedicated throttle valve for recirculating the exhaust gas or complicated control, this control system comprises a partition dividing part of the intake passage into a main passage and an auxiliary passage, a main intake throttle valve pivotably supported on a shaft in the main passage and connected to an accelerator operating device, and an auxiliary intake throttle valve provided in the auxiliary passage. When the accelerator operating device is not operated, the main intake throttle valve produces a negative pressure exerted on the exhaust recirculating passage by closing the main passage, and when the accelerator operating device is operated, the main intake throttle valve regulates the negative pressure as its portion downstream of the supporting shaft swings in a direction going away from a downstream end of the partition thereby varying the cross-sectional area of the main passage. The auxiliary intake throttle valve is opened and closed according to operating conditions of the engine.

A diesel engine designed to close an intake throttle valve to reduce the amount of intake air when an accelerator operating device is not operated, such as in an engine idling state, as stated above is advantageous in that it can reduce combustion noise by lowering the maximum pressure in cylinders. In this kind of diesel engine, however, there can arise cases where the air-fuel ratio becomes too low due to the reduction in the amount of intake air, resulting in an increase in ignition delay and an eventual increase in combustion noise.

Especially in a direct injection diesel engine constructed to inject fuel directly into cylinders, a swirl which contributes to accelerating combustion is not strong enough compared to what is produced by the aforementioned diesel engine having the precombustion chamber. Therefore, if the direct injection diesel engine is controlled to reduce the amount of intake air by closing an intake throttle valve as stated above, the air-fuel ratio will significantly drop. This would result in an increase in the amount of smoke in exhaust gases and might eventually give rise to the possibility of misfire. Thus, the conventional direct injection diesel engine has a problem that it is impossible to reduce the amount of intake air by closing the intake throttle valve beyond a particular point and, therefore, the combustion noise cannot be effectively suppressed.

If an engine provided with an exhaust recirculating system for recirculating exhaust gas to an intake passage through an exhaust recirculating passage as described in the aforementioned Patent Publication is so constructed as to reduce the amount of intake air by closing an intake throttle valve when the engine is at idle, a large amount of exhaust gas is recirculated back into cylinders as a negative pressure is developed on the downstream side of the intake throttle valve. This construction has a problem that the amount of fresh air introduced into the cylinders decreases in correspondence with the amount of recirculated exhaust gas, causing an increased risk of misfire.

### Technical Problem underlying the invention and the solution thereof

In view of the foregoing, it is an object of the invention to provide a control system for a direct injection diesel engine which makes it possible to effectively reduce combustion noise while preventing generation of smoke and misfiring under engine idling conditions.

According to the invention, a control system for a direct injection diesel engine having a fuel injector for injecting fuel whose quantity corresponds to engine load directly into a cylinder and an intake throttle valve provided in an intake passage comprises an intake throttle valve controller which performs a control operation for reducing the amount of intake air by closing the intake throttle valve to thereby make the air-fuel ratio in the cylinder smaller than the theoretical air-fuel ratio during the idling operation in the engine warm state, and a fuel injection controller which controls the fuel injector to make pilot injection of the fuel during execution of the control operation for reducing the amount of intake air.

The control system of this construction performs the control operation for reducing the amount of intake air to make the air-fuel ratio in the cylinder smaller than the theoretical air-fuel ratio during the idling operation in the engine warm state, thereby enabling effective suppression of combustion noise by lowering the maximum cylinder pressure. Since the control system makes the pilot injection of the fuel while executing the aforementioned control operation for reducing the amount of intake air, it becomes possible to improve fuel ignitability to effectively prevent an increase in the amount of smoke and misfiring, as well as to prevent an increase in combustion noise caused by delayed ignition.

In one aspect of the invention, the control system for the direct injection diesel engine controls the opening of the intake throttle valve in such a way that the amount of intake air becomes smaller than a value which would provide optimum fuel economy (fuel consumption) when it is assumed that the pilot injection is not made during warm engine idling in which the intake throttle valve controller executes the aforementioned control operation for reducing the amount of intake air.

This construction serves to improve combustion efficiency and avoid a deterioration of fuel economy by virtue of the pilot injection, and to achieve both an improvement in fuel economy and a reduction in combustion noise as a relatively small amount of intake air is set during the idling operation in the engine warm state as stated above.

In another aspect of the invention, the control system for the direct injection diesel engine further comprises an exhaust recirculating passage for recirculating exhaust gas to the downstream side of the intake throttle valve, an exhaust recirculating valve provided in the exhaust recirculating passage, and an exhaust recirculation controller which controls the amount of recirculated exhaust gas such that the air-fuel ratio in the cylinder becomes generally equal to the theoretical air-fuel ratio under normal operating conditions, wherein the control system brings the exhaust recirculating valve to its closed state during the idling operation in the engine warm state in which the intake throttle valve controller executes the aforementioned control operation for reducing the amount of intake air.

This construction serves to avoid an excessive decrease in the amount of intake air and effectively prevent engine misfiring as the exhaust recirculating valve is brought to the closed state during the idling operation in the engine warm state in which the intake throttle valve controller executes the aforementioned control operation for reducing the amount of intake air.

In another aspect of the invention, the control system for the direct injection diesel engine to be installed on a vehicle further comprises a start-ready sensor for detecting whether the vehicle is in a ready-to-start state, wherein the control system is so constructed as to reduce the degree of closing the intake throttle valve if it is determined based on a sensing signal fed from the start-ready sensor that the vehicle is in the ready-to-start state during the idling operation in the engine warm state in which the intake throttle valve controller executes the aforementioned control operation for reducing the amount of intake air.

In this construction, the control system suppresses combustion noise by reducing the amount of intake air to lower the maximum cylinder pressure during the idling operation in the engine warm state while the vehicle is in stationary. In addition, the control system controls to reduce the degree of closing the intake throttle valve to decrease the reduction of intake air amount and slightly increase the intake air amount prior to the vehicle start when the vehicle is in ready to run state as a vehicle start preparation scheme so as to solve the problem related to the lack of intake air amount due to the delay in response during intake step at the time of vehicle start operation thereby securing the good vehicle start performance and preventing the increase of the smoke generation. In other words, the combustion noise can be suppressed if the amount of intake air is sufficiently reduced in case the vehicle is not yet ready to run state while it is in stationary mode with an engine in idling mode during the engine warm state.

In still another aspect of the invention, the control system for the direct injection diesel engine further comprises an accelerator operation sensor for detecting whether an accelerator pedal has been operated, wherein the control system is so constructed as to further reduce the degree of closing the intake throttle valve than in the ready-to-start state if it is determined based on a sensing signal fed from the accelerator operation sensor that the accelerator pedal has been operated during the idling operation in the engine warm state in which the intake throttle valve controller executes the aforementioned control operation for reducing the amount of intake air.

In this construction, the control system executes a correction to further reduce the degree of closing the intake throttle valve than in the ready-to-start state if it is determined that the accelerator pedal has been operated during the idling operation in the engine warm state in this construction. This would provide engine power necessary in a vehicle start-off phase as the amount of intake air is increased in a step-by-step fashion from the time prior to vehicle start, and prevent an increase in the amount of smoke which might occur when the engine is raced at idle.

In yet another aspect of the invention, the control system for the direct injection diesel engine further comprises an external load sensor for detecting whether any external load is exerted on the engine, wherein the control system is so constructed as to increase engine speed by increasing the amount of injected fuel and correspondingly reduce the degree of closing the intake throttle valve if it is determined based on a sensing signal fed from the external load sensor that an external load is exerted on the engine during the idling operation in the engine warm state in which the intake throttle valve controller executes the aforementioned control operation for reducing the amount of intake air.

In this construction, the control system executes a control operation for increasing the amount of injected fuel while effectively suppressing combustion noise by setting the opening of the intake throttle valve to a specific value to effectively suppress combustion noise and avoids an excessive reduction in the amount of intake air by executing the aforementioned correction for reducing the degree of closing the intake throttle valve when an external load is exerted on the engine. This makes it possible to effectively prevent engine stops which could be caused by external loads exerted on the engine.

### BRIEF DESCRIPTION OF THE DRAWINGS

FIG. 1 is a schematic diagram of a direct injection diesel engine provided with a control system according to a preferred embodiment of the present invention;
FIG. 2 is a functional block diagram showing a specific configuration of the control system;
FIG. 3 is a flowchart showing control operation performed by the control system of the embodiment;
FIG. 4 is a target setting chart used for setting various target values;
FIG. 5 is a graph showing a relationship between engine speed and intake air pressure;
FIG. 6 is a graph showing a relationship between maximum cylinder pressure and intake air pressure;
FIG. 7 is a graph showing a relationship between fuel economy and intake air pressure;
FIG. 8 is a graph showing a relationship between the amounts of fresh air and recirculated exhaust gas introduced into cylinders and intake air pressure in a conventional engine;
FIG. 9 is a graph showing a relationship between the amounts of fresh air and recirculated exhaust gas introduced into the cylinders and intake air pressure when a control operation for closing an exhaust gas recirculation (EGR) valve is executed; and
FIG. 10 is a graph showing a relationship between the amounts of fresh air and recirculated exhaust gas introduced into the cylinders and intake air pressure when pilot injection is made while executing the control operation for closing the EGR valve.

### DESCRIPTION OF THE PREFERRED EMBODIMENT OF THE INVENTION

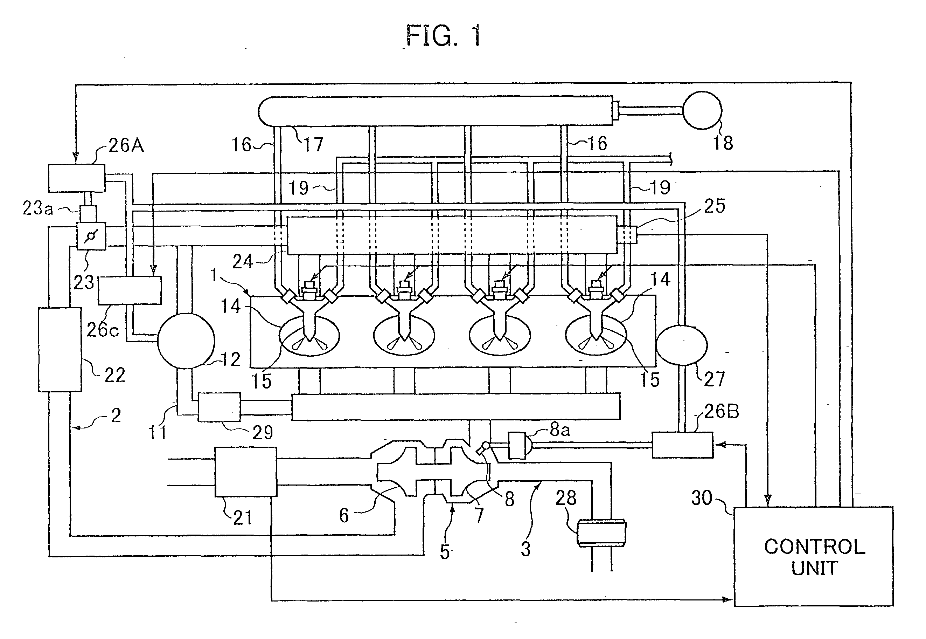

FIG. 1 is a schematic diagram of a diesel engine for a vehicle provided with a control system according to the present invention in which an intake passage 2 and an exhaust passage 3 are connected to an engine body 1. This engine comprises a turbocharger 5 which includes a compressor 6 provided in the intake passage 2 and a turbine 7 provided in the exhaust passage 3 for driving the compressor 6 with exhaust gas energy.

The engine further comprises an exhaust recirculating system which includes an exhaust gas recirculation (EGR) passage 11 connecting the exhaust passage 3 and the intake passage 2 to each other and an EGR valve 12 provided in the EGR passage 11. Furthermore, a catalytic converter 28 is provided in the exhaust passage 3.

Each cylinder 14 of the engine body 1 is provided with a fuel injection valve (fuel injector) 15 having more than one nozzle orifice for injecting fuel directly into a combustion chamber. Fuel-inlet side of the fuel injection valve 15 of each cylinder 14 is connected to a common rail (common pipe) 17 via a fuel distribution line 16. The common rail 17 is connected to a fuel injection pump 18. The fuel output from the fuel injection pump 18 is pressurized in the common rail 17 and delivered to the individual fuel injection valves 15. The engine is constructed such that the amount of injected fuel, injection pressure and timing of each fuel injection valve 15 can be controlled according to control signals output from a later-described control unit 30. Fuel-outlet side of the fuel injection valve 15 of each cylinder 14 is connected to a return passage 19.

The intake passage 2 is provided, from its upstream side to downstream side, with an air intake sensor 21 formed essentially of an air flow sensor, the compressor 6 of the turbocharger 5, an intercooler 22, an intake throttle valve 23 and a surge tank 24 in which a boost-pressure sensor 25 formed essentially of a pressure sensor is provided.

The intake throttle valve 23 driven by a vacuum-operated actuator 23a reduces air flow through the intake passage 2 in a particular engine operating range. The actuator 23a is connected to a vacuum pump 27 by way of a solenoid valve 26A. The duty cycle of the solenoid valve 26A is controlled according to a control signal output from the control unit 30 to regulate the ratio between negative pressure and atmospheric pressure introduced into the actuator 23a, whereby the opening of the intake throttle valve 23 is controlled.

The turbocharger 5 serving as an exhaust gas recirculation quantity regulator is made of a variable-geometry turbo (VGT) which is provided with a number of variable blades 8 constituting variable nozzles for varying the area of exhaust flow to the turbine 7. The turbocharger 5 is constructed such that its turbine efficiency (boost efficiency) is controlled by adjusting the angle of the variable blades 8 from a fully-closed state where the exhaust flow area is minimized to a fully-open state where the exhaust flow area is maximized. More specifically, the variable blades 8 are driven by a vacuum-operated actuator 8a which is connected to the vacuum pump 27 by way of a solenoid valve 26B. The duty cycle of the solenoid valve 26B is controlled to regulate the ratio between negative pressure and atmospheric pressure introduced into the actuator 8a, whereby the opening of the variable blades 8 of the turbocharger 5 is controlled.

One end of the EGR passage 11 is connected to the upstream side of the turbine 7 in the exhaust passage 3, while the other end of the EGR passage 11 is connected to the downstream side of the intake throttle valve 23 in the intake passage 2, e.g., to the surge tank 24 or to its upstream side. An EGR cooler (recirculated gas cooler) 29 is provided in the EGR passage 11, upstream of the EGR valve 12. The EGR cooler 29 is of a water-cooling type which introduces engine-cooling water for cooling recirculated exhaust gas.

The EGR valve 12 is connected to the vacuum pump 27 by way of a solenoid valve 26C whose duty cycle is controllable according to a control signal output from the control unit 30. The ratio between negative pressure and atmospheric pressure introduced into a negative pressure chamber in the EGR valve 12 is regulated by controlling the duty cycle of the solenoid valve 26A to thereby control the opening of the EGR valve 12.

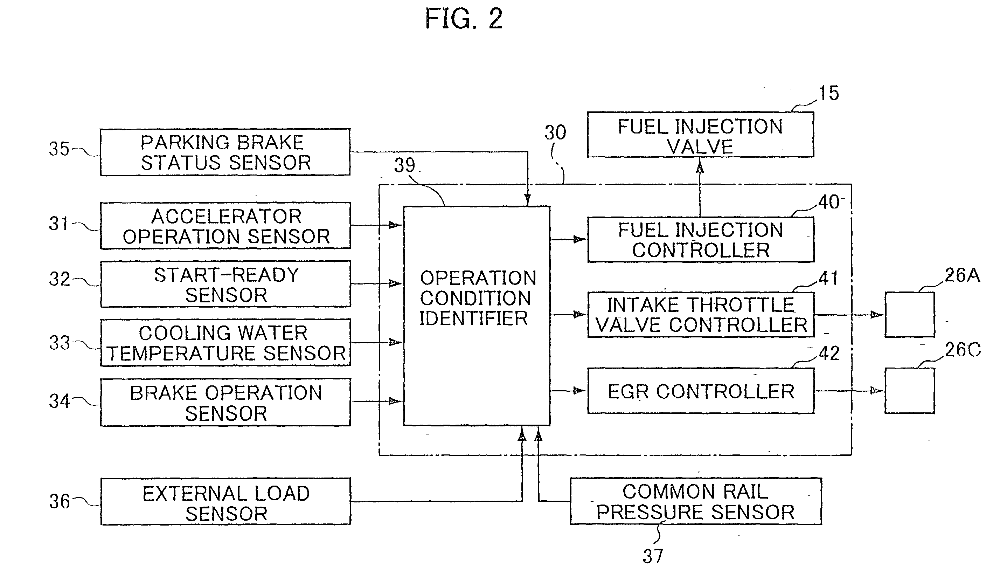

The control unit 30 receives various sensing signals. These include signals entered from the air intake sensor 21 and the boost-pressure sensor 25 shown in FIG. 1 as well as those entered from an accelerator operation sensor 31 which detects depression status of an accelerator pedal, a start-ready sensor 32 which detects whether the vehicle is in a ready-to-start state based on transmission connecting status and depression status of a clutch pedal, for instance, a cooling water temperature sensor 33 which detects the temperature of the engine-cooling water, a brake operation sensor 34 which detects depression status of a brake pedal, a parking brake status sensor 35 which detects operating status of a parking brake, an external load sensor 36 which detects status of external loads, and a common rail pressure sensor 37 which detects fuel pressure within the common rail 17 shown in FIG. 2.

The control unit 30 includes an operating condition identifier 39 which judges operating conditions of the engine based on the aforementioned sensing signals, a fuel injection controller 40 which controls the amount of fuel injected by the fuel injection valves 15 as well as their injection pressure and timing according to the engine operating conditions identified by the operating condition identifier 39 and controls the fuel injection valves 15 to make pilot injection prior to main injection where necessary, an intake throttle valve controller 41 which controls the amount of intake air introduced into the cylinders 14 by adjusting the opening of the intake throttle valve 23, and an EGR controller 42 which controls the amount of recirculated exhaust gas by adjusting the opening of the EGR valve 12. Where the main injection is performed around an upper dead center during the compression stroke while the pilot injection is performed few of tenth degrees prior to the main injection in the later part of the compression stroke.

The fuel injection controller 40 controls the amount of injected fuel and injection timing by transmitting a control signal to the fuel injection valves 15 as will be later described in detail. The fuel injection controller 40 performs a control operation which causes the injection valves 15 to make pilot injection in which a small amount of fuel is injected prior to main injection in most operating ranges of the engine, in particular, during an idling operation in an engine warm state (also referred to as during warm engine idling), excluding specific operating ranges such as a high-load, high-speed range. When the pilot injection is made, the total amount of fuel to be injected (target fuel injection quantity) and the ratio between the amounts of fuel to be injected by the pilot injection and main injection are calculated according to the engine operating conditions. The amounts of fuel to be injected by the pilot injection and main injection are calculated from the total amount of fuel to be injected and the ratio between the amounts of fuel to be injected by the pilot injection and main injection. The interval between the pilot injection and main injection is also calculated according to the engine operating conditions.

The engine is constructed such that the fuel injection controller 40 calculates a target injection pressure corresponding to the engine operating conditions based on a map storing predefined injection pressures and the fuel injection pressure is controlled by controlling an unillustrated fuel pressure regulator based on a comparison between the target injection pressure and the fuel pressure detected by the common rail pressure sensor 37.

The target fuel injection pressure is set such that it is relatively low in a low-load, low-speed range of the engine and becomes higher with an increase in engine speed and load. An increase in the fuel injection pressure serves to produce a finer fuel spray and enables injection of a larger amount of fuel in a shorter time period, so that higher torques are obtained with an increase in the fuel injection pressure. If the injection pressure is increased at a low engine speed, however, pump load increases and nitrogen oxides (NOx) become more likely to occur. Thus, lower injection pressures are set at lower engine speeds and higher injection pressures are set at higher engine speeds to make it possible to inject the fuel in shorter time periods. On , the other hand, lower injection pressures are set to make it easier to suppress combustion noise in lower-load ranges, while higher injection pressures are set in higher-load ranges to achieve higher torques.

The intake throttle valve controller 41 controls the opening of the intake throttle valve 23 by transmitting a control signal to the solenoid valve 26A so that a desired amount of intake air (target intake air quantity) appropriate for the engine operating conditions would be obtained. During idling operation in the engine warm state (also referred to as a warm engine idling), the intake throttle valve controller 41 reduces the amount of intake air by adjusting the intake throttle valve 23 in its closing direction such that the air-fuel ratio in the cylinders 14 would become equal to or smaller than the theoretical air-fuel ratio (λ=1), e.g., 0.7≦ λ ≦1.0. It should be noted that the warm engine state is meant to be the state determined by detecting the temperature of the engine cooling water and the temperature thereof equals to or above 60 degrees is considered to be the engine warm state in practical sense.

The EGR controller 42 performs a feedback control operation to adjust the opening of the EGR valve 12 by outputting a control signal to the solenoid valve 26C that causes the air-fuel ratio to match the theoretical air-fuel ratio at least during steady-state engine operation. During the feedback control operation, a target air-fuel ratio is read out from a predefined map in accordance with a target engine torque and engine speed and a target amount of fresh air (target fresh air quantity) to be introduced into the combustion chambers of the engine body 1 is calculated based on the target air-fuel ratio and the target fuel injection quantity set by the fuel injection controller 40. The calculated value of the target fresh air quantity and actual fresh air quantity detected by the air flow sensor 21 are entered to the EGR controller 42.

The EGR controller 42 outputs the control signal, which corresponds to the difference between the target fresh air quantity and actual fresh air quantity, to the solenoid valve 26C for driving the EGR valve 12 to perform the aforementioned feedback control operation for adjusting the opening of the EGR valve 12 and thereby eliminate the difference between the target and actual fresh air quantities. Here, the aforementioned target air-fuel ratio is set such that it becomes approximately equal to the theoretical air-fuel ratio in the low-load, low-speed range of the engine, for example. Thus, the EGR controller 42 causes the EGR valve 12 to be completely closed to achieve the necessary amount of fresh air introduced into the cylinders 14 during warm engine idling in which the engine is controlled such that the intake throttle valve controller 41 reduces the amount of intake air to make the air-fuel ratio in the cylinders 14 smaller than the theoretical air-fuel ratio.

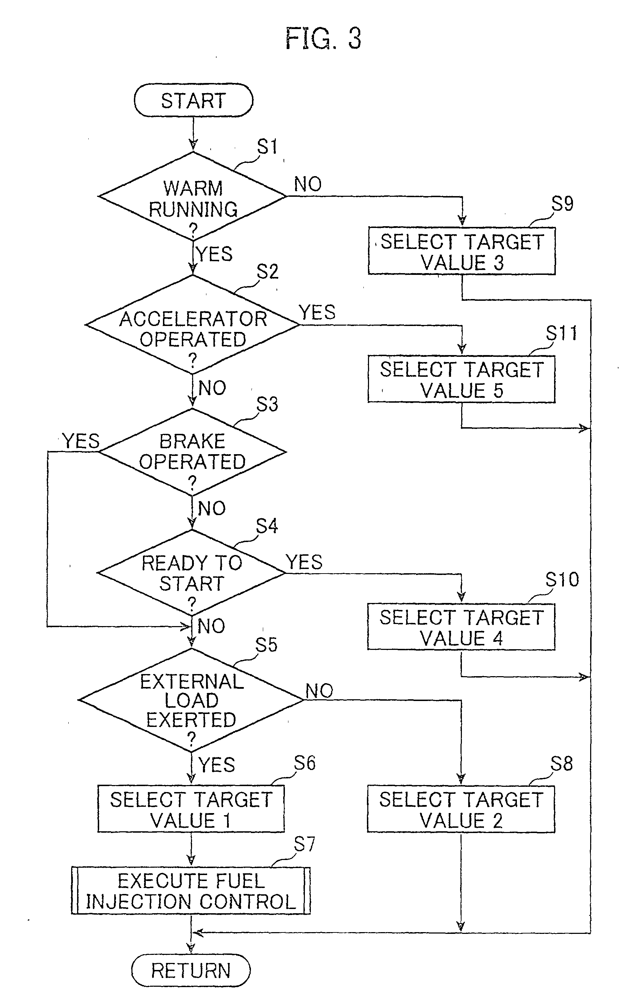

Control operation performed by the control unit 30 during warm engine idling is now described referring to a flowchart shown in FIG. 3. First, following the start of the operation of the flowchart, a judgment is made in step S1 to check whether the engine is in a warm running state based on the sensing signal fed from the cooling water temperature sensor 33. If the judgment result in step S1 is in the affirmative, the control unit 30 judges whether the accelerator pedal has been operated in step S2 based on the sensing signal fed from the accelerator operation sensor 31.

If it is determined that the accelerator pedal has not been operated in step S2, the control unit 30 further judges whether the brake pedal has been operated in step S3 based on the sensing signal fed from the brake operation sensor 34. If the judgment result in step S3 is in the negative, the control unit 30 further judges whether the vehicle is in a ready-to-start state in step S4 based on the sensing signal fed from the start-ready sensor 32.

If it is determined that the brake pedal has been operated in step S3 or the vehicle is not in the ready-to-start state in step S4, the control unit 30 judges whether any external load is exerted on the engine in step S5 based on the sensing signal fed from the external load sensor 36.

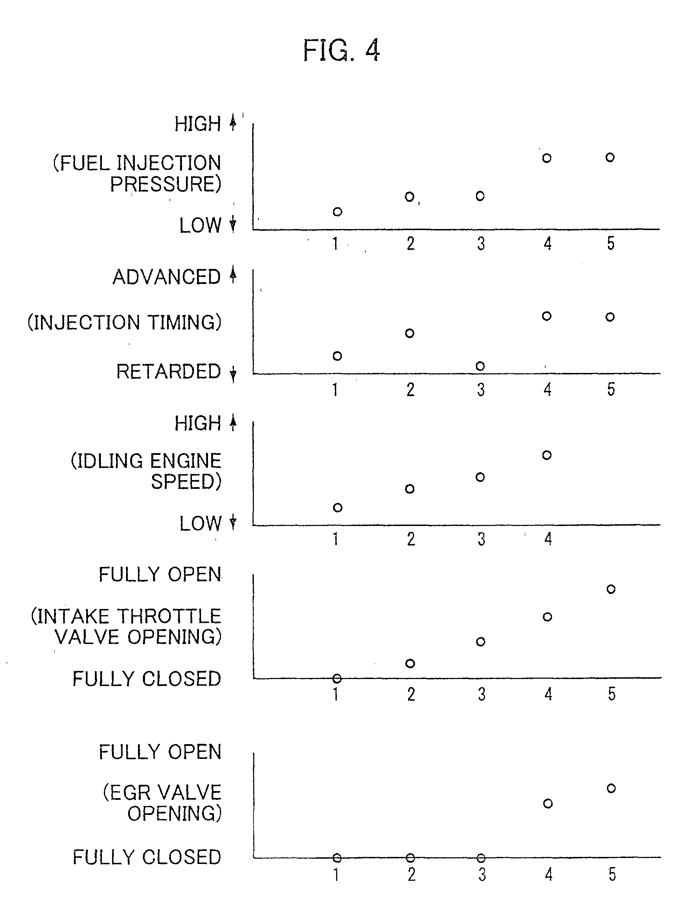

If the judgment result in step S5 is in the negative, or if it is determined that the vehicle is in a normal warm idling state in which the vehicle is not in the ready-to-start state and no external load is exerted on the engine, the control unit 30 selects target values 1 shown in a target setting chart of FIG. 4 in step S6. Specifically, the control unit 30 selects the target values 1 for the fuel injection pressure, timings of the main injection and pilot injection, and idling engine speed which are set to achieve the normal idling state. Then, after setting a feedback control value for the amount of fuel to be injected based on the target value 1 for the idling engine speed and selecting additional target values 1 which will bring the intake throttle valve 23 and the EGR valve 12 to their fully-closed state, the control unit 30 performs a fuel injection control operation to make the pilot injection prior to the main injection (step S7).

If the judgment result in step S5 is in the affirmative, or if it is determined that an external load is exerted on the engine, the control unit 30 selects target values 2 which increase the fuel injection pressure by a specific amount compared to the normal idling state, advance the timings of the main injection and pilot injection by specific amounts, and increase the idling engine speed by a specific amount in step S8. In this case, the control unit 30 sets a feedback control value for the amount of fuel to be injected based on the target value 2 for the idling engine speed, and selects additional target values 2 which correct the position of the intake throttle valve 23 by moving it in its opening direction by a specific amount from its fully-closed position, and bring the EGR valve 12 to its fully-closed state. The operation flow then proceeds to step S7.

If the judgment result in step S1 is in the negative, or if it is determined that the engine is in a cold idling state, the control unit 30 selects target values 3 which set the fuel injection pressure to approximately the same level as will be achieved when an external load is exerted on the engine, retard the timings of the main injection and pilot injection by specific amounts compared to the aforementioned normal idling state, and increase the idling engine speed by a specific amount from the idling engine speed achieved when the external load is exerted on the engine in step S9. In this case, the control unit 30 sets a feedback control value for the amount of fuel to be injected based on the target value 3 for the idling engine speed, and selects additional target values 3 which correct the position of the intake throttle valve 23 by moving it in its opening direction by a specific amount from the position taken when the external load is exerted on the engine, and bring the EGR valve 12 to its fully-closed state. The operation flow then proceeds to step S7.

If the judgment result in step S4 is in the affirmative, or if it is determined that the vehicle is in the ready-to-start state with the clutch pedal depressed and a transmission connected by a driver, for example, the control unit 30 selects target values 4 which further increase the fuel injection pressure than in the aforementioned cold idling state, further advance the injection timing than when the external load is exerted on the engine, and further increase the idling engine speed than in the cold idling state in step S10. In this case, the control unit 30 sets a feedback control value for the amount of fuel to be injected based on the target value 4 for the idling engine speed, and selects additional target values 4 which correct the position of the intake throttle valve 23 by moving it in its opening direction by a specific amount from the position taken in the cold idling state, release the EGR valve 12 from its fully-closed state and bring it to an opening appropriate for the operating conditions of the engine. The operation flow then proceeds to step S7.

Furthermore, if the judgment result in step S2 is in the affirmative, or if it is determined that the driver has depressed the accelerator pedal to start the vehicle or to race the engine at idle, for instance, the control unit 30 selects target values 5 which set the fuel injection pressure and injection timing to approximately the same level as in the aforementioned ready-to-start state, correct the position of the intake throttle valve 23 by moving it in its opening direction by a specific amount from the ready-to-start state, release the EGR valve 12 from its fully-closed state and bring it to an opening appropriate for the operating conditions of the engine in step S11. The operation flow then proceeds to step S7. Since the idling state is canceled when the accelerator pedal has been operated, no target value is set for the idling engine speed in step S11. The amount of fuel to be injected is determined according to the operating conditions of the engine in this case.

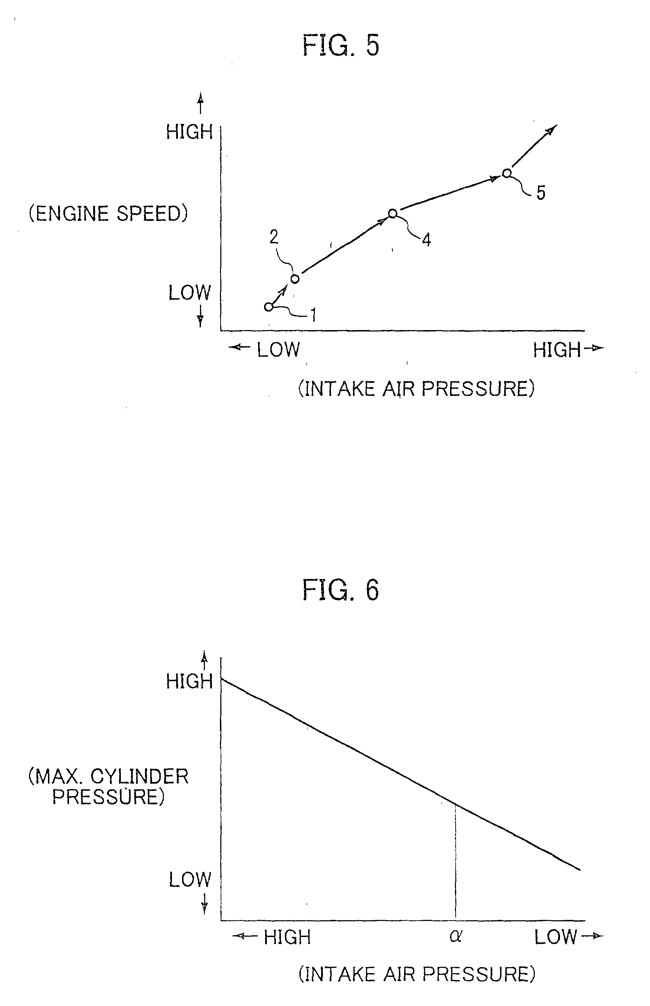

FIG. 5 shows how the engine speed and the intake air pressure in the intake passage 2 vary in relation to each other when the vehicle transfers from the warm engine idling state to a start-off phase. In the normal idling state where the aforementioned target values 1 are selected, both the engine speed and the intake air pressure are at their lowest levels. When the vehicle transfers to an external load condition in which the aforementioned target values 2 are selected, both the engine speed and the intake air pressure slightly increase. When the vehicle transfers from this condition to the ready-to-start state where the aforementioned target values 4 are selected, the engine speed and the intake air pressure increase by specific amounts. When the vehicle transfers from the ready-to-start state to an accelerator-operating condition in which the aforementioned target values 5 are selected, the engine speed increases by a specific amount and the intake air pressure further increases. Since the vehicle starts off subsequently, the engine speed and the intake air pressure further increase rapidly.

Since the control system is so constructed as to make the air-fuel ratio in the cylinders 14 equal to or smaller than the theoretical air-fuel ratio by causing the intake throttle valve controller 41 to close the intake throttle valve 23, thereby reducing the amount of intake air during warm engine idling, and to make pilot injection of the fuel according to the control signal output from the fuel injection controller 40 during execution of the above control operation for reducing the amount of intake air, it is possible to effectively suppress combustion noise and generation of smoke while preventing the occurrence of misfire.

As can be seen from FIG. 6 showing a relationship between the maximum cylinder pressure and intake air pressure, which drops when the intake throttle valve 23 is closed, the maximum cylinder pressure has a tendency to drop with a decrease in the intake air pressure. This is because the more the opening of the intake throttle valve 23 is reduced by closing it, the more the amount of intake air introduced into the cylinders 14 decreases due to an increase in resistance to intake air flow. It is therefore possible to suppress the combustion noise by closing the intake throttle valve 23 to decrease the maximum cylinder pressure and thereby reducing exciting force exerted on the engine.

A swirl which contributes to accelerating combustion is not strong enough in an ordinary direct injection diesel engine compared to what is produced by an engine having a precombustion chamber. Therefore, misfiring inevitably occurs in the ordinary direct injection diesel engine when intake air pressure becomes equal to or lower than a specific value α. Contrary to this, if the pilot injection of the fuel is made when the engine is at idle as stated above, it is possible to spread the fuel injected by the main injection while burning it using the fuel injected by the pilot injection as an ignition source and, as a consequence, misfiring can be effectively avoided. Furthermore, the pilot injection serves to improve combustibility, prevent smoke generation as well as an increase in combustion noise caused by delayed ignition.

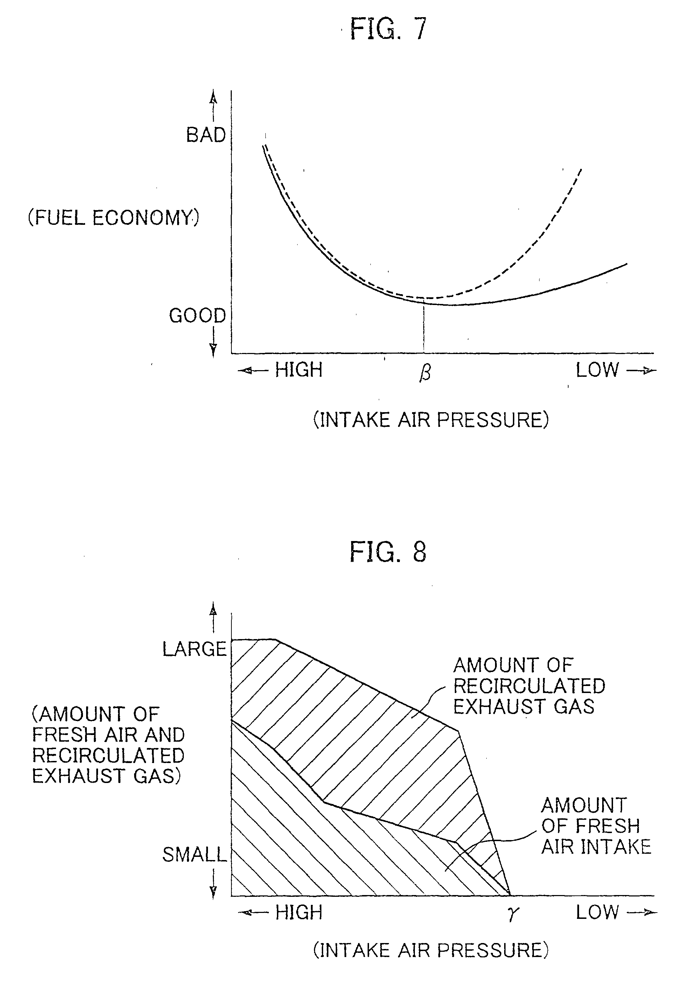

Executing the control operation for reducing the amount of intake air by the intake throttle valve controller 41 without performing the pilot injection during warm engine idling could be effective in improving fuel economy as compression loss in the cylinders 14 decreases. Note that throughout the specification, the term such as the improvement of the fuel economy is used and it is meant to be a reduction of the fuel consumption (by weight) per a certain output, expressed as "gram/ KW h" in unit. This, however, produces a tendency toward a deterioration of fuel economy on the whole due to a degradation in combustibility and an increase in resistance to the intake air flow. Therefore, if the pilot injection is not made, optimum fuel economy is achieved when the intake air pressure becomes equal to a specific value β and the fuel economy deteriorates when the intake air pressure becomes higher or lower than this value β as shown by a broken line in FIG. 7.

In contrast, if the pilot injection is made during warm engine idling, the fuel economy is improved as mentioned above so that the fuel economy does not significantly deteriorate even when the intake air pressure becomes lower than the value β as shown by a solid line in FIG. 7. Thus, the control system of the present embodiment has an advantage that it can achieve both an improvement in fuel economy and a reduction in combustion noise by controlling the opening of the intake throttle valve 23 in such a way that the amount of intake air becomes smaller than a value which would provide optimum fuel economy when it is assumed that the pilot injection is not made during warm engine idling in which the control operation for reducing the amount of intake air is executed by the intake throttle valve controller 41.

Furthermore, the control system of the present embodiment can effectively prevent engine misfiring by avoiding a decrease in the amount of intake air caused by recirculation of an excessive amount of exhaust gas into the cylinders 14. This is because the control system is provided with the EGR passage 11 for recirculating the exhaust gas to the downstream side of the intake throttle valve 23, the EGR valve 12 fitted in the EGR passage 11, and the intake throttle valve controller 41 which controls the amount of recirculated exhaust gas such that the air-fuel ratio in the cylinders 14 would become equal to the target air-fuel ratio (e.g., the theoretical air-fuel ratio) under normal operating conditions, and is so constructed as to restrict recirculation of the exhaust gas by setting the EGR valve 12 to its closed state during warm engine idling in which the control operation for reducing the amount of intake air is executed.

More specifically, when the EGR valve 12 is opened to achieve a specific opening under engine idling or low-load conditions, there would be a relationship as shown in FIG. 8 between the intake air pressure which drops when the intake throttle valve 23 is closed and the amounts of fresh air and recirculated exhaust gas introduced into the cylinders 14. As can be seen from FIG. 8, the amount of fresh air introduced into the cylinders 14 with respect to the amount of recirculated exhaust gas has a tendency to increase with a decrease in the intake air pressure and the amount of fresh air introduced into the cylinders 14 has a tendency to rapidly decrease with a drop in the intake air pressure. It is therefore inevitable that engine misfiring occurs at a point where the intake air pressure becomes lower than a specific value *γ.*

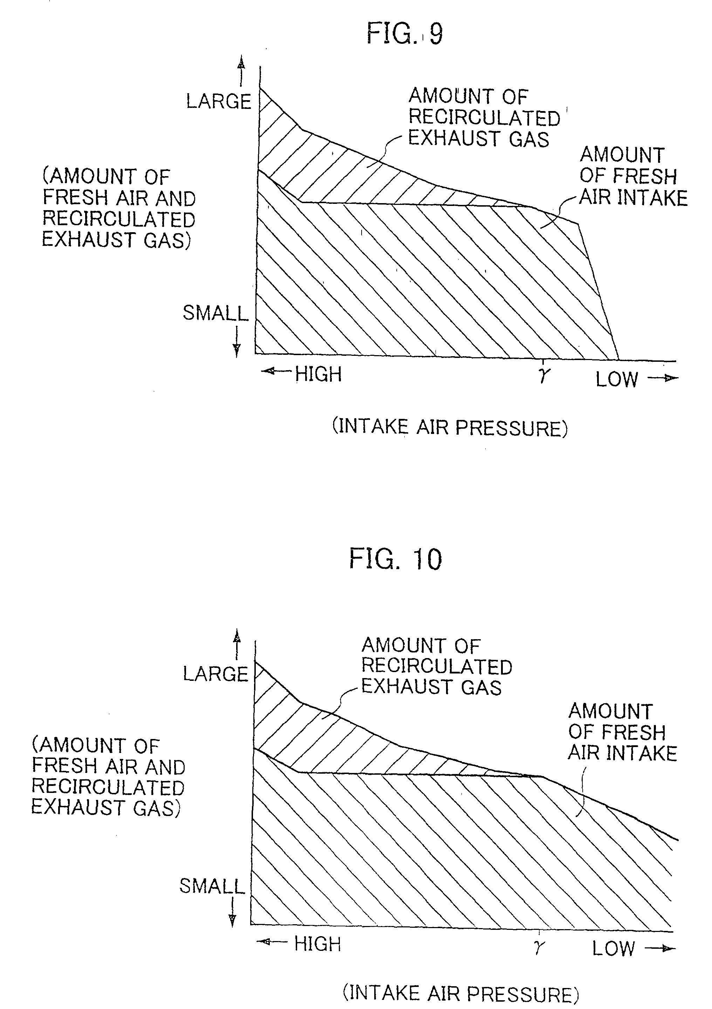

In contrast, if the EGR valve 12 is closed by the EGR controller 42 while a control operation which makes the air-fuel ratio in the cylinders 14 smaller than the target air-fuel ratio by closing the intake throttle valve 23 is being executed under engine idling conditions, it is possible to reduce the amount of recirculated exhaust gas introduced into the cylinders 14 with a decrease in the intake air pressure and thereby prevent the decrease in the amount of fresh air introduced into the cylinders 14 as shown in FIG. 9. It is therefore possible to shift a threshold point where engine misfiring begins to occur to a low pressure side of the aforementioned value *γ.*

If the control system the embodiment is so constructed as to close the EGR valve 12 and improve the combustibility by making the pilot injection in the engine idling state, engine misfiring does not occur even when the intake air pressure is minimized by fully closing the intake throttle valve 23 as shown in FIG. 10. Thus, the control system of the embodiment has an advantage that it can effectively suppress combustion noise and smoke generation while preventing the occurrence of misfire by controlling the engine to close the EGR valve 12 and execute the pilot injection when the intake throttle valve 23 is closed in the engine idling state.

Furthermore, the control system of the embodiment can effectively prevent a sudden change in combustion noise caused by a sudden increase in the amount of intake air immediately after starting of the vehicle while suppressing the combustion noise by avoiding an increase in the maximum cylinder pressure prior to the starting of the vehicle. This is because the control system is provided with the start-ready sensor 32 for detecting whether the vehicle is in the ready-to-start state, and is so constructed as to reduce the degree of closing the intake throttle valve 23 if it is determined based on the sensing signal fed from the start-ready sensor 32 that the vehicle is in the ready-to-start state during warm engine idling in which the control operation for reducing the amount of intake air is executed by the intake throttle valve controller 41.

Although the foregoing description of the preferred embodiment has dealt with an example in which the control system is so constructed as to check whether the vehicle is in the ready-to-start state based on the transmission connecting status and the depression status of the clutch pedal detected by the start-ready sensor 32, this construction may be modified such that the control system verifies whether the vehicle is in the ready-to-start state based on the sensing signal fed from the parking brake status sensor 35. Alternatively, the control system may be constructed such that it verifies whether the vehicle is not in the ready-to-start state yet based on the sensing signal fed from the parking brake status sensor 35.

The control system of the embodiment is provided with the accelerator operation sensor 31 for detecting whether the accelerator pedal has been operated and is so constructed as to further reduce the degree of closing the intake throttle valve 23 than in the ready-to-start state if it is determined based on the sensing signal fed from the accelerator operation sensor 31 that the accelerator pedal has been operated during warm engine idling in which the control operation for reducing the amount of intake air is executed by the intake throttle valve controller 41. This construction confers an advantage that engine power necessary for starting the vehicle is gained while preventing a sudden change in combustion noise by increasing the opening of the intake throttle valve 23 in a step-by-step fashion in the vehicle start-off phase to obtain a sufficient amount of intake air. Moreover, even when the engine is raced at idle, it is possible to prevent an increase in the amount of smoke caused by a shortage of intake air by setting the opening of the intake throttle valve 23 to a specific value to obtain a sufficient amount of intake air.

In addition, the control system of the embodiment is provided with the external load sensor 36 for detecting whether any external load is exerted on the engine and is so constructed as to increase the engine speed by increasing the amount of injected fuel and correspondingly reduce the degree of closing the intake throttle valve 23 if it is determined based on the sensing signal fed from the external load sensor 36 that an external load is exerted on the engine during warm engine idling in which the control operation for reducing the amount of intake air is executed by the intake throttle valve controller 41. It is therefore possible to increase the amount of injected fuel while effectively suppressing combustion noise by reducing the amount of intake air to a certain degree, but avoiding an excessive reduction in the amount of intake air. Thus, it is possible to effectively prevent engine stops which could be caused by external loads exerted on the engine.

Furthermore, the control system of the present embodiment can further improve the combustibility and effectively prevent engine misfiring and smoke generation. This is because the control system is so constructed as to advance injection timings, i.e., the timings of the main injection and pilot injection, if it is determined based on the sensing signal fed from the start-ready sensor 32 that the vehicle is in the ready-to-start state, or if it is determined based on the sensing signal fed from the external load sensor 36 that an external load is exerted on the engine, during warm engine idling in which the control operation for reducing the amount of intake air is executed by the intake throttle valve controller 41.

Furthermore, the control system of the embodiment is so constructed as to retard the timings of the main injection and pilot injection by the specific amounts if it is determined that the engine is in the cold idling state. This construction is advantageous in that it is possible to accelerate engine warm-up by afterburning of the fuel.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

## Claims

1. A control system for a direct injection diesel engine having a fuel injector for injecting fuel, whose quantity corresponds to an engine load, directly into a cylinder and an intake throttle valve provided in an intake passage, said control system comprising:
an intake throttle valve controller which performs a control operation for reducing the amount of intake air by closing the intake throttle valve to thereby make the air-fuel ratio in the cylinder equals to or smaller than the theoretical air-fuel ratio during an idling operation in an engine warm state; and
a fuel injection controller which controls the fuel injector to make pilot injection of the fuel prior to a main injection during execution of said control operation for reducing the amount of intake air.

2. A control system according to claim 1, wherein said control system controls the opening of the intake throttle valve in such a way that the amount of intake air becomes smaller than a value which would provide optimum fuel economy when it is assumed that the pilot injection is not made during the idling operation in the engine warm state in which the intake throttle valve controller executes said control operation for reducing the amount of intake air.

3. A control system according to claim 1, said control system further comprising:
an exhaust recirculating passage for recirculating exhaust gas to the downstream side of the intake throttle valve;
an exhaust recirculating valve provided in the exhaust recirculating passage; and
an exhaust recirculation controller which controls the amount of recirculated exhaust gas such that the air-fuel ratio in the cylinder becomes generally equal to the theoretical air-fuel ratio under normal operating conditions;
wherein said control system brings the exhaust recirculating valve to its closed state during the idling operation in the engine warm state in which the intake throttle valve controller executes said control operation for reducing the amount of intake air.

4. A control system according to claim 1, said control system further comprising a start-ready sensor for detecting whether the vehicle is in a ready-to-start state and wherein said control system is so constructed as to reduce the degree of closing the intake throttle valve if it is determined based on a sensing signal from the start-ready sensor that the vehicle is in the ready-to-start state during the idling operation in the engine warm state in which the intake throttle valve controller executes said control operation for reducing the amount of intake air.

5. A control system according to claim 4, said control system further comprising an accelerator operation sensor for detecting whether an accelerator pedal has been operated and wherein said control system is so constructed as to further reduce the degree of closing the intake throttle valve than in the ready-to-start state if it is determined based on a sensing signal from the accelerator operation sensor that the accelerator pedal has been operated during the idling operation in the engine warm state in which the intake throttle valve controller executes said control operation for reducing the amount of intake air.

6. A control system according to claim 1, further comprising an external load sensor for detecting whether any external load is exerted on the engine and wherein said control system is so constructed as to increase engine speed by increasing the amount of injected fuel and correspondingly reduce the degree of closing the intake throttle valve if it is determined based on a sensing signal fed from the external load sensor that an external load is exerted on the engine during the idling operation in the engine warm state in which the intake throttle valve controller executes said control operation for reducing the amount of intake air.

7. A control system according to claim 4, wherein the start-ready sensor assumes that the vehicle is in the ready-to-start state if an inactivation of a parking brake or a depression of a clutch pedal is detected when the vehicle is in a stationary state and the accelerator pedal is not operated.

## Patentansprüche

1. System zur Regelung eines Dieselmotors mit Direkteinspritzung, der ein Einspritzaggregat aufweist, um Kraftstoff, dessen Menge einer Motorlast entspricht, direkt in einen Zylinder einzuspritzen, und eine Drosselklappe, die in einer Ansaugleitung angeordnet ist, wobei dieses Regelungssystem umfaßt:
einen Drosselklappenregler, der einen Regelvorgang zum Verringern der Ansaugluftmenge durch Schließen der Drosselklappe durchführt, um dadurch während eines Leerlaufbetriebs im warmen Motorzustand das Luft/Kraftstoff Verhältnis im Zylinder kleiner oder gleich dem theoretischen Luft/Kraftstoff-Verhältnis zu machen; und
einen Kraftstoffeinspritzungsregler, der das Einspritzaggregat steuert, um während der Ausführung dieses Regelvorgangs zur Verringerung der Ansaugluftmenge eine Voreinspritzung des Kraftstoffs vor der Haupteinspritzung durchzuführen.

2. Regelungssystem zur nach Anspruch 1, wobei das Regelungssystem die Öffnung der Drosselklappe so regelt, daß die Ansaugluftmenge kleiner wird als ein Wert, der einem optimalen Kraftstoffverbrauch entspräche, wenn vorausgesetzt wird, daß während des Leerlaufbetriebs im warmen Motorzustand, in welchem der Drosselklappenregler den Regelvorgang zur Verringerung der Ansaugluftmenge durchführt, keine Voreinspritzung durchgeführt wird.

3. Regelungssystem nach Anspruch 1, wobei das Regelungssystem außerdem umfaßt:
eine Abgasrückführungsleitung, um Abgas hinter der Drosselklappe rückzuführen;
ein Abgasrückführungsventil, das in der Abgasrückführungsleitung angeordnet ist; und
einen Abgasrückführungsregler, der die Menge des rückgeführten Abgases so regelt, daß das Luft/Kraftstoff-Verhältnis im Zylinder unter normalen Betriebsbedingungen allgemein dem theoretischen Luft/Kraftstoff-Verhältnis entspricht;
wobei dieses Regelungssystem während des Leerlaufbetriebs im warmen Motorzustand, in welchem der Drosselklappenregler den Regelvorgang zur Verringerung der Ansaugluftmenge durchführt, das Abgasrückführungsventil in seinen geschlossenen Zustand bringt.

4. Regelungssystem nach Anspruch 1, wobei das Regelungssystem außerdem einen Anfahrbereitschaftssensor umfaßt, um zu erkennen, ob das Fahrzeug in einem anfahrbereiten Zustand ist, und wobei das Regelungssystem so aufgebaut ist, daß es den Schließungsgrad der Drosselklappe reduziert, wenn während des Leerlaufbetriebs im warmen Motorzustand, in welchem der Drosselklappenregler den Regelvorgang zur Verringerung der Ansaugluftmenge durchführt, auf der Basis eines Abtastsignals vom Anfahrbereitschaftssensor bestimmt wird, daß das Fahrzeug in einem anfahrbereiten Zustand ist.

5. Regelungssystem nach Anspruch 4, wobei das Regelungssystem außerdem einen Gaspedalbetätigungssensor umfaßt, um zu erkennen, ob ein Gaspedal betätigt wurde, und wobei das Regelungssystem so aufgebaut ist, daß es den Schließungsgrad der Drosselklappe weiter als im anfahrbereiten Zustand reduziert, wenn während des Leerlaufbetriebs im warmen Motorzustand, in welchem der Drosselklappenregler den Regelvorgang zur Verringerung der Ansaugluftmenge durchführt, auf der Basis eines Abtastsignals vom Gaspedalbetätigungssensor bestimmt wird, daß das Gaspedal betätigt wurde.

6. Regelungssystem nach Anspruch 1, außerdem umfassend einen Lastsensor, um zu erkennen, ob eine externe Last am Motor anliegt, und wobei das Regelungssystem so aufgebaut ist, daß es die Motordrehzahl erhöht, indem es die Kraftstoffeinspritzmenge erhöht und den Schließungsgrad der Drosselklappe entsprechend reduziert, wenn auf der Basis eines Abtastsignals vom Lastsensor bestimmt wird, daß während des Leerlaufbetriebs im warmen Motorzustand, in welchem der Drosselklappenregler den Regelvorgang zur Verringerung der Ansaugluftmenge durchführt, eine externe Last am Motor anliegt.

7. Regelungssystem nach Anspruch 4, wobei der Anfahrbereitschaftssensor voraussetzt, daß das Fahrzeug in einem anfahrbereiten Zustand ist, wenn eine deaktivierte Handbremse oder ein durchgetretenes Kupplungspedal erkannt wird, während das Fahrzeug in einem stehenden Zustand ist, und das Gaspedal nicht betätigt wird.

## Revendications

1. Système de commande pour un moteur diesel à injection directe ayant un injecteur de carburant pour injecter du carburant, dont la quantité correspond à une charge du moteur, directement dans un cylindre et une soupape d'étranglement d'admission fournie dans un passage d'admission, ledit système de commande comprenant:
un régulateur de la soupape d'étranglement d'admission effectuant un processus de réglage pour réduire la quantité d'air d'admission en fermant la soupape d'étranglement d'admission afin de faire en sorte de cette manière que le rapport air-carburant dans le cylindre est égal ou inférieur au rapport air-carburant théorique pendant un fonctionnement en régime ralenti à l'état chaud du moteur ; et
un régulateur d'injection de carburant qui régule l'injecteur de carburant pour effectuer une préinjection du carburant avant une injection principale pendant l'exécution dudit processus de réglage pour réduire la quantité d'air d'admission.

2. Système de commande selon la revendication 1, dans lequel ledit système de commande commande l'ouverture de la soupape d'étranglement d'admission de manière à ce que la quantité d'air d'admission devienne inférieure à une valeur qui fournirait une économie maximale de carburant lorsque l'on suppose que la préinjection n'est pas réalisée pendant le fonctionnement en régime ralenti à l'état chaud du moteur dans lequel le régulateur de la soupape d'étranglement d'admission exécute ledit processus de réglage pour réduire la quantité d'air d'admission.

3. Système de commande selon la revendication 1, ledit système de commande comprenant par ailleurs :
un passage de recirculation d'échappement pour faire recirculer du gaz d'échappement vers le côté en aval de la soupape d'étranglement d'admission ;
une valve de recirculation d'échappement fournie dans le passage de recirculation d'échappement ; et
un régulateur de recirculation d'échappement qui régule la quantité de gaz d'échappement mis en recirculation, de sorte que le rapport air-carburant dans le cylindre devienne généralement égal au rapport air-carburant théorique dans des conditions normales d'exploitation ;
dans lequel ledit système de commande amène la valve de recirculation d'échappement dans son état fermé pendant le fonctionnement en régime ralenti à l'état chaud du moteur dans lequel le régulateur de la soupape d'étranglement d'admission exécute ledit processus de réglage pour réduire la quantité d'air d'admission.

4. Système de commande selon la revendication 1, ledit système de commande comprenant par ailleurs un détecteur de l'état prêt au démarrage afin de détecter si le véhicule est dans un état prêt à démarrer, et dans lequel ledit système de commande est conçu de manière à réduire le degré de fermeture de la soupape d'étranglement d'admission si l'on détermine, sur la base d'un signal de détection provenant du détecteur de l'état prêt au démarrage, que le véhicule se trouve à l'état prêt à démarrer pendant le fonctionnement en régime ralenti à l'état chaud du moteur dans lequel le régulateur de la soupape d'étranglement d'admission exécute ledit processus de réglage afin de réduire la quantité d'air d'admission.

5. Système de commande selon la revendication 4, ledit système de commande comprenant par ailleurs un détecteur de manoeuvre d'accélération pour détecter si une pédale d'accélération a été manoeuvrée, et dans lequel ledit système de commande est conçu de manière à d'avantage réduire le degré de fermeture de la soupape d'étranglement d'admission que ce n'est le cas à l'état prêt au démarrage, si l'on détermine, sur la base d'un signal de détection provenant du détecteur de manoeuvre d'accélération, que la pédale de l'accélérateur a été manoeuvrée pendant le fonctionnement en régime ralenti à l'état chaud du moteur dans lequel le régulateur de la soupape d'étranglement d'admission exécute ledit processus de réglage afin de réduire la quantité d'air d'admission.

6. Système de commande selon la revendication 1, comprenant par ailleurs un détecteur de charge externe pour détecter si une charge externe est exercée sur le moteur, et où ledit système de commande est conçu de manière à augmenter la vitesse du moteur en augmentant la quantité de carburant injecté et à réduire de manière correspondante le degré de fermeture de la soupape d'étranglement d'admission si l'on détermine, sur la base d'un signal de détection fourni par le détecteur de charge externe, qu'une charge externe est exercée sur le moteur pendant le fonctionnement en régime ralenti à l'état chaud du moteur dans lequel le régulateur de la soupape d'étranglement d'admission exécute ledit processus de réglage pour réduire la quantité d'air d'admission.

7. Système de commande selon la revendication 4, dans lequel le détecteur de l'état prêt au démarrage suppose que le véhicule se trouve dans un état prêt à démarrer si une inactivation d'un frein parking ou un enfoncement d'une pédale d'embrayage est détectée/é lorsque le véhicule est dans un état immobile et que l'accélérateur n'est pas manoeuvré.
